# EUROPEAN PATENT SPECIFICATION

(11) **EP 2 061 176 B1**
(45) Date of publication and mention of the grant of the patent: **17.07.2013**
(21) Application number: 07121044.7
(22) Date of filing: 19.11.2007
(51) Int. Cl.: H04L 1/18

(54) **Incremental redundancy with resegmentation**
Inkrementelle Redundanz mit Resegmentierung
Redondance incrémentale avec re-segmentation

(43) Date of publication of application: 20.05.2009
(73) Proprietor: Research In Motion Limited, Waterloo, ON N2L 3W8 (CA)
(72) Inventor: Tran, Phat, Waterloo Ontario N2K 4A7 (CA)
(74) Representative: Moore, Barry

(56) References cited:
- WO-A-02/23792
- US-A1- 2001 034 209
- US-A1- 2003 014 709

## Description

Enhanced General Packet Radio Service (EGPRS), also known as Enhanced Data rates for GSM Evolution (EDGE), is a digital mobile telephone technology that allows data transmission rates to be increased and improves data transmission reliability.

Two types of an error control method known as Automatic Repeat-reQuest (ARQ) are used in EGPRS, as described in 3GPP TS 43.064 - 3^{rd} Generation Partnership Project; Technical Specification Group GERAN; Digital cellular telecommunications system (Phase 2+); General Packet Radio Service (GPRS); Overall description of the GPRS radio interface; Stage 2 (Release 5). When a block of data has not been correctly received, the sending entity resends the block of data. The sending entity may be the network or a mobile telephone. The receiving entity may be the network or a mobile telephone. In the first type, blocks of coded data that the receiving entity is unable to successfully decode are resegmented and retransmitted. The receiving entity decodes each retransmission in isolation from the previous transmissions. In the second type, Type II Hybrid ARQ, also known as incremental redundancy (IR), if the receiving entity is unable to successfully decode a block of coded data, that block is retransmitted using a different puncturing scheme. The received bits from the different transmissions are combined to aid the decoding.

It is expected that blocks are not resegmented when using incremental redundancy. Indeed, the EGPRS specifications provide for a "resegment" bit in ARQ control to prevent resegmentation when the network employs incremental redundancy.

WO02/23792 A describes various schemes in which error correction and error detection functions are performed along with ACK/NACK feedback signaling. In FIG. 2, the retransmissions are identical to the original transmission. The original transmission and retransmissions comprise the systematic bits and the same sub-group of parity bits. In FIG. 3, the systematic bits are sent only in the original transmission. Different sub-groups of parity bits are sent in the original transmission and in each of the retransmissions. In FIG. 4, the systematic bits are sent in the original transmission and in all retransmissions. Different sub-groups of parity bits are sent in the original transmission and in each of the retransmissions. The subgroups of parity bits may be created, for example, by different puncturing of the set of all parity bits.

### SUMMARY

The present teaching relates to a method as detailed in claim 1. The teaching also relates to a communication station as detailed in claim 14. Furthermore, the teaching relates to a computer readable medium as detailed in claim 18. Advantageous embodiments are detailed in the dependent claims.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

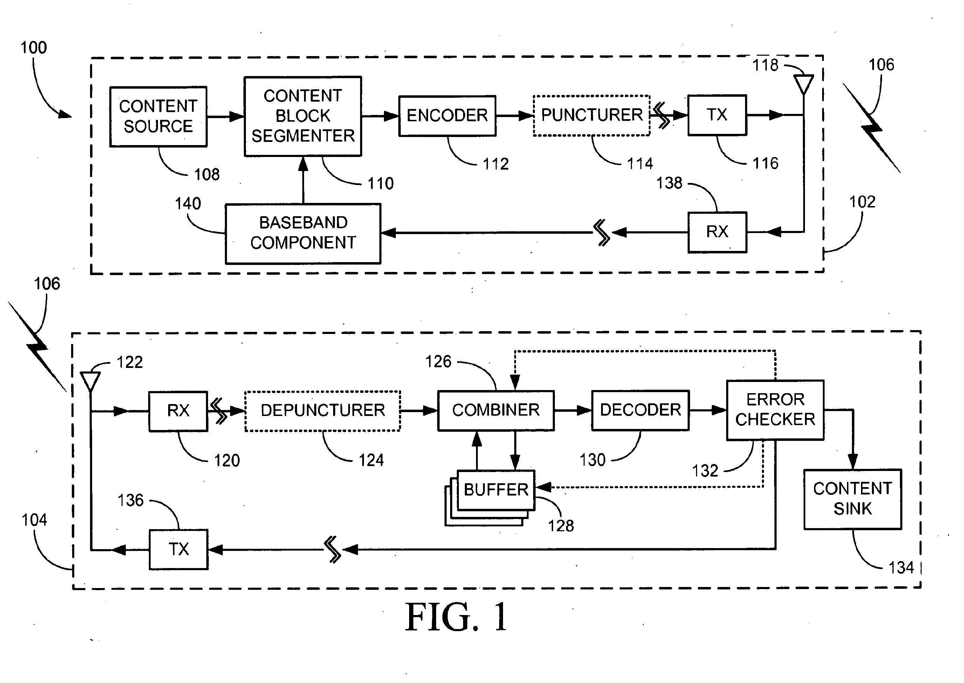

FIG. 1 is a block diagram of an exemplary radio communication system;

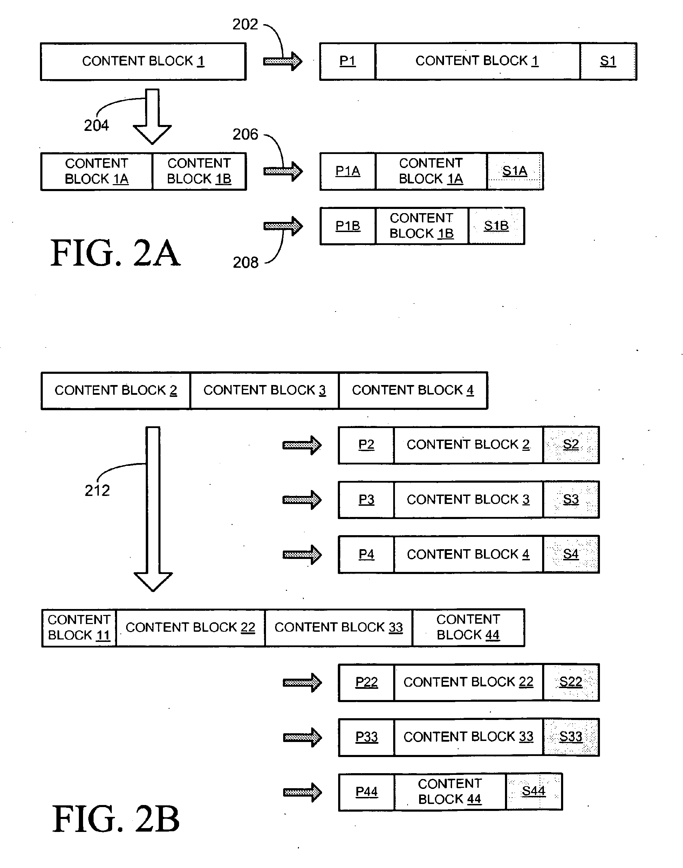

FIGS. 2A and 2B are illustrations of different exemplary segmentations of digital content into content blocks and the appending of prefix bits and suffix bits to the content blocks;

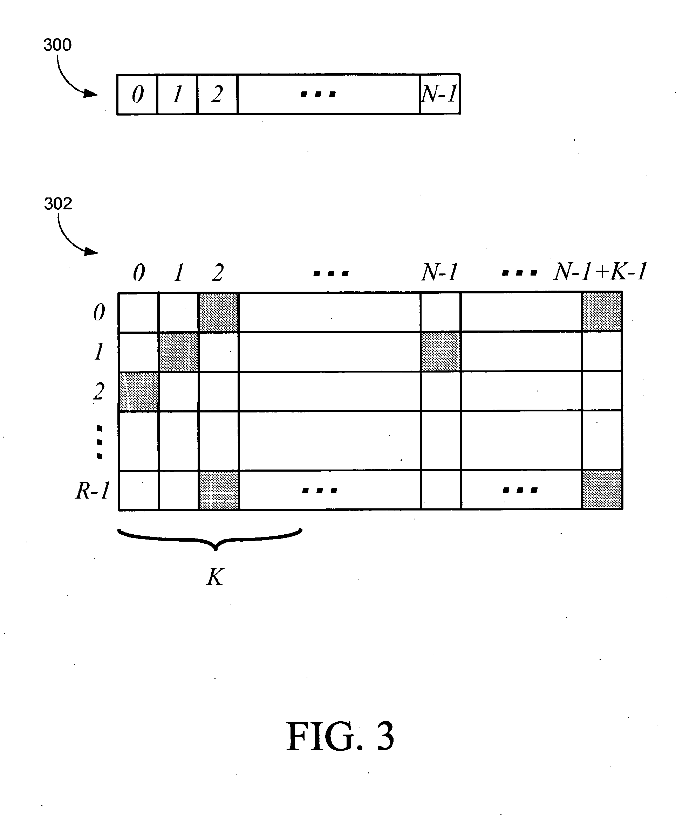

FIG. 3 is an illustration of an exemplary block of data and the matrix of encoded bits generated therefrom;

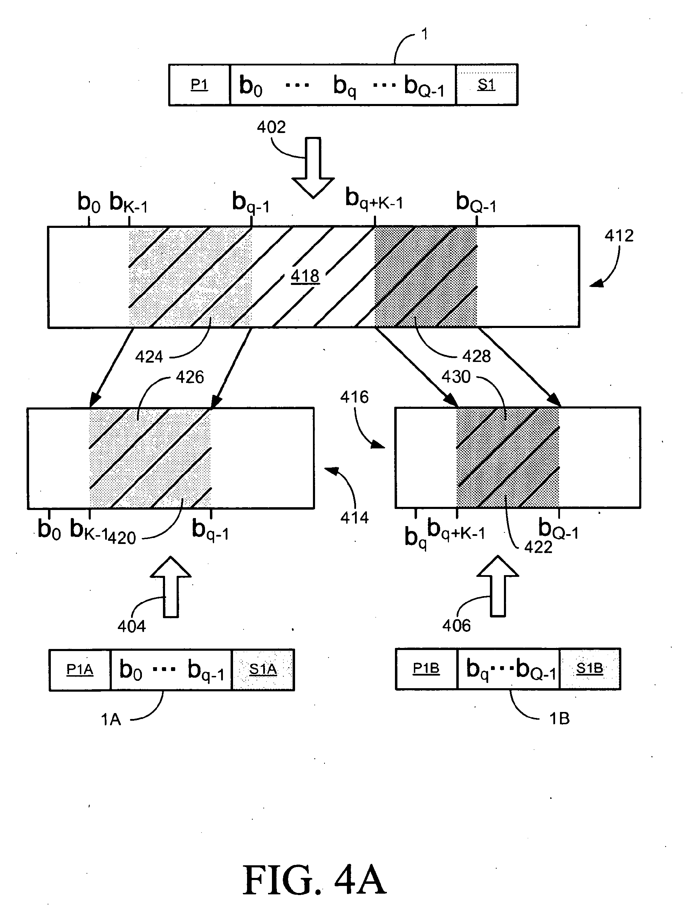

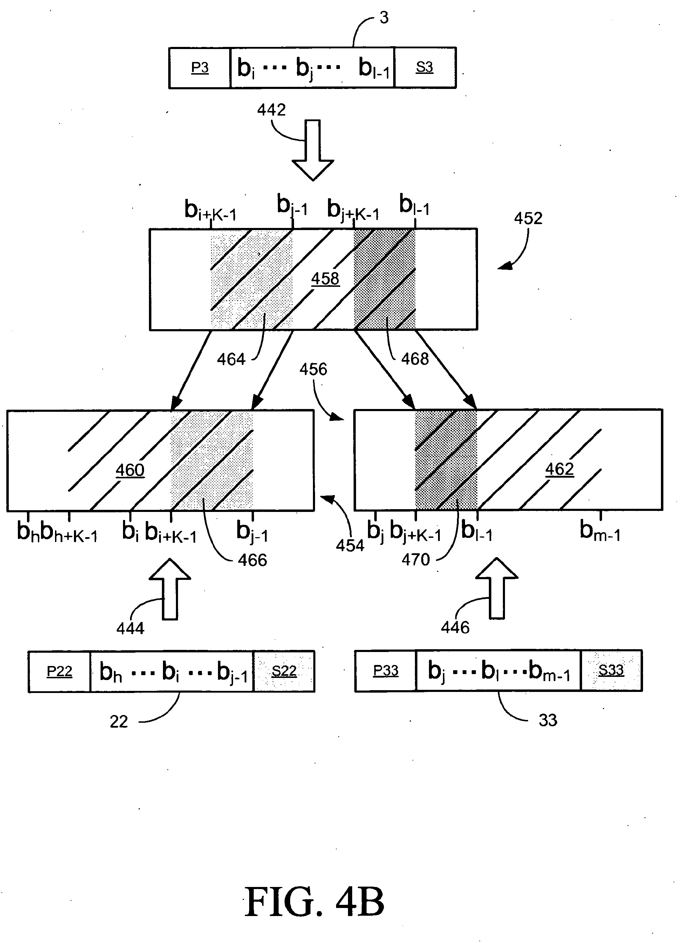

FIGS. 4A and 4B are illustrations of different exemplary received matrices;

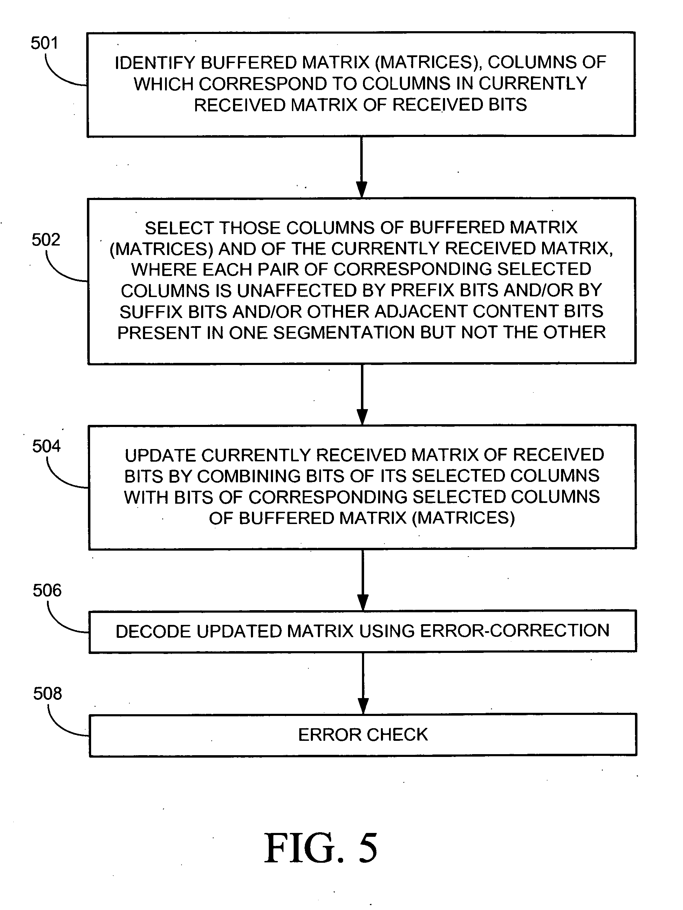

FIG. 5 is a flowchart of an exemplary method that may be implemented in a combiner, a decoder and an error checker;

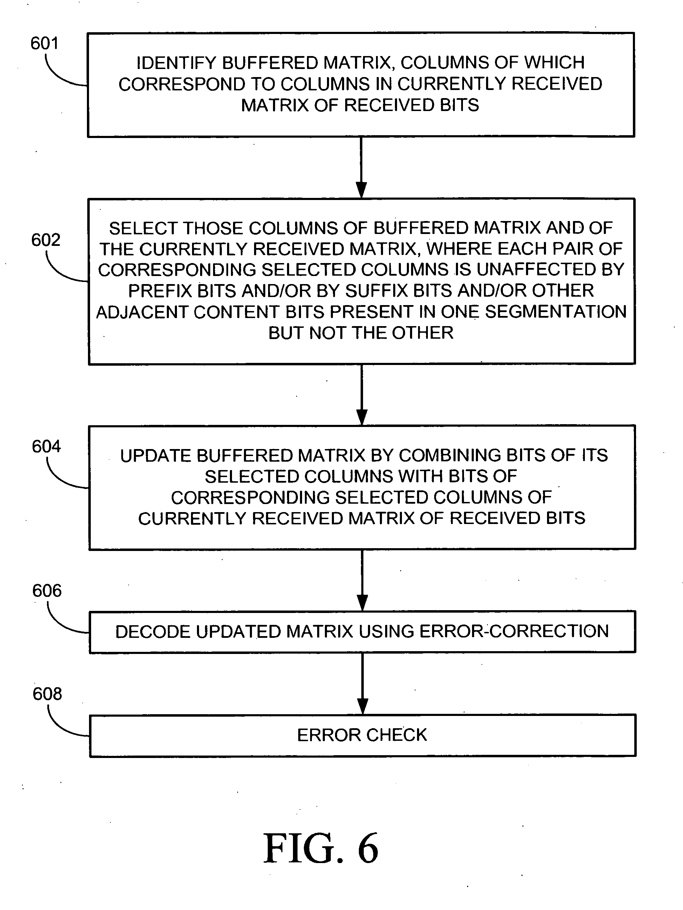

FIG. 6 is a flowchart of another exemplary method that may be implemented in a combiner, a decoder and an error checker; and

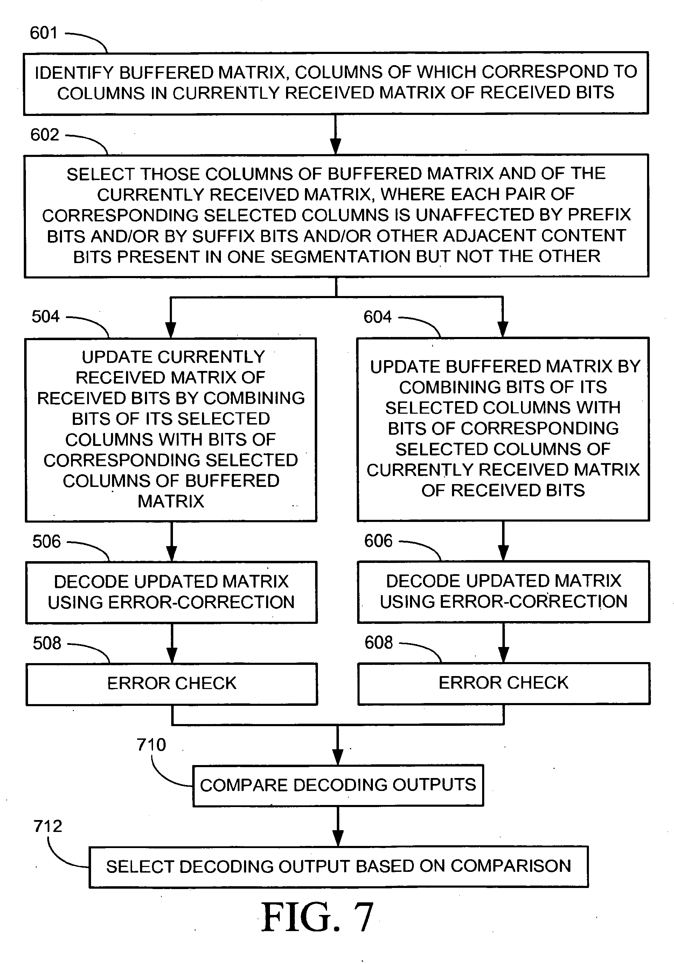

FIG. 7 is a flowchart of yet another exemplary method that may be implemented in a combiner, a decoder and an error checker.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

FIG. 1 is a block diagram of an exemplary radio communication system 100. System 100 comprises a communication station 102 and a communication station 104 able to communicate over radio communication channels 106. In the following description, communication station 102 acts as a sending station and communication station 104 acts as a receiving station. For example, station 102 may be a mobile network base station and station 104 may be a mobile telephone, and transmissions from station 102 to station 104 are considered to be downlink communications. However, the following description is equally applicable to uplink communications, which would be the case, for example, if station 104 were a mobile network base station and station 102 were a mobile telephone. It should be noted that the mobile telephone may have additional capabilities and may use the mobile network to transmit and/or receive non-telephonic data.

Station 102 comprises a content source 108 that produces digital content. The digital content is segmented into blocks by a content block segmenter 110 according to a particular block segmentation scheme. In some contexts, the content block is known as the payload. Prefix bits and suffix bits are appended to each content block, and the content block with appended bits is then encoded by an encoder 112 according to a particular coding scheme. For example, encoder 112 may use a convolutional code without recursiveness.

The encoded block is then punctured by a puncturer 114 according to a particular puncturing scheme. For example, each third bit of the encoded block may be deleted. The output of puncturer 114 is referred to as channel bits, which are provided to a transmitter 116. As is known in the art, transmitter 116 puts the channel bits into a form that permit their communication upon radio frequency (RF) channels and cause the communication of the channel bits upon the RF channels via an antenna 118. For example, transmitter 116 may comprise upconverters, modulators, a power amplifier, and other components.

Briefly, FIGS. 2A and 2B are illustrations of different exemplary segmentations of digital content into content blocks and the appending of prefix bits and suffix bits to the content blocks. FIG. 2A shows a content block 1, which prior to encoding, has appended to it (as indicated by an arrow 202) with prefix bits P1 and suffix bits S1. A different segmentation of the same digital content into two separate content blocks, content block 1A and content block 1B, is indicated by an arrow 204. Content block 1 is identical to a concatenation of content block 1A and content block 1B. Content block 1A is a proper substring of content block 1, i.e. content block 1A is wholly contained in content block 1. Likewise, content block 1B is a proper substring of content block 1. Moreover, no portion of content block 1 is common to content block 1A and content block 1B, i.e. content block 1A and content block 1B are non-overlapping. For example, content block 1 may comprise 256 bits of digital content, content block 1A may comprise the first 128 bits of that digital content and content block 1B may comprise the second 128 bits of the digital content. Resegmentation of a single content block into two non-overlapping content blocks of equal size (or in a few cases, almost equal size), each of which is a proper substring of the single content block, and the reverse case (concatenation of two equal-sized content blocks into a single content block) are the only forms of resegmentation permitted in the EGPRS specification. Prior to encoding, content block 1A has appended to it (as indicated by an arrow 206) prefix bits P1A and suffix bits S1A, which differ from prefix bits P1 and suffix bits S1, respectively. Likewise, prior to encoding, content block 1B has appended to it (as indicated by an arrow 208) prefix bits P1B and suffix bits S1B, which differ from prefix bits P1 and suffix bits S1, respectively. The prefix bits in EDGE are just a couple of bits of control information that, for some reason, were not included in the header of the content block. The number of suffix bits depends on the size of the cyclic redundancy check (CRC). Even if content block 1A and content block 1B are identical, prefix bits P1A could differ from prefix bits P1B, and suffix bits S1A could differ from suffix bits S1B.

FIG. 2B shows content blocks 2, 3 and 4 and an exemplary resegmentation (indicated by an arrow 212) of the digital content of those blocks into content blocks 11, 22, 33 and 44. Content block 11 comprises a portion of the digital content of content block 2. Content block 22 comprises portions of the digital content of content blocks 2 and 3. Content block 33 comprises portions of the digital content of content blocks 3 and 4. Content block 44 comprises a portion of the digital content of content block 4 and a portion of the digital content of another content block (not shown). The segmentation of the digital content into content blocks 2, 3, and 4 results in the appending of prefix bits P2, P3, and P4, respectively, and of suffix bits S2, S3, and S4, respectively, to those content blocks prior to encoding. Likewise, the segmentation of the digital content into content blocks 11, 22, 33 and 44 results in the appending of prefix bits and suffix bits to those content blocks prior to encoding. Content block 22 has appended to it prefix bits P22 and suffix bits P22, which differ from prefix bits P2 and suffix bits S2, respectively. Content block 33 has appended to it prefix bits P33 and suffix bits P33, which differ from prefix bits P3 and suffix bits S3, respectively. Content block 44 has appended to it prefix bits P44 and suffix bits P44, which differ from prefix bits P4 and suffix bits P4, respectively.

Briefly, FIG. 3 is an illustration of an exemplary block of data and the matrix of encoded bits generated therefrom. A block 300 has *N* bits, which includes the prefix bits, the bits of the content block, and the suffix bits. In the example shown in FIG. 3, a convolutional code with a constraint length K and a rate of *1*/*R* is used by encoder 112 to encode block 300. A convolutional code of rate *1*/*R* has R generator polynomials, *G₀, G₁,* ..., *G_{R-1},* and encoder 112 produces a matrix 302 of encoded bits with R rows, each row *i* being the output of generator polynomial *Gᵢ.* In general, the value of the *m*^{th} bit in block 300 affects the values of the encoded bits in columns m through *m+K-1* of matrix 302, where m is an index that runs from 0 to *N-1.*

Consider, for example, that the first 4 bits of block 300 are prefix bits, and that the last 6 bits of block 300 are suffix bits. Then the bits of columns 0 through *3+K-1* are all affected by the prefix bits, and the bits of columns *N-6* through *N-1+K-1* are all affected by the suffix bits. However, the bits of columns *4+K-1* through *N-7* are unaffected by the prefix bits or the suffix bits.

Puncturing is the process of deleting bits of encoded data to reduce the data transmitted. For example, the puncturing scheme used by puncturer 114 may delete every third bit of matrix 302, starting at the top left corner and counting the bits column by column. The deleted bits are indicated in FIG. 3 as shaded boxes of matrix 302. Although in this description, puncturing and depuncturing are performed in stations 102 and 104, respectively, the technology described herein is equally applicable to cases where no puncturing or depuncturing is performed.

Returning to FIG. 1, station 104 comprises a receiver 120 to detect RF signals via an antenna 122 and to downconvert the received signals to baseband levels. Additional operations not separately illustrated are performed. For example, soft decision operations are also performed on the received data. For example, the output of the soft decision operator may be that there is a 45% probability that a particular received bit is a 1 and a 55% probability that the particular received bit is a 0. Although in this description, soft decision operations are performed on the received data in station 104, the technology described herein is equally applicable to cases where hard decision operations are performed on the received data in station 104 prior to depuncturing and/or combining.

The soft received bits are provided to a depuncturer 124, which inserts erasures at the appropriate locations in the stream of received bits to fill in the gaps created by puncturer 114. The output of depuncturer 124 may be considered a matrix similar to matrix 302 of FIG. 3, in which each matrix element that was deleted by puncturer 114 is replaced by an erasure and each matrix element that was not deleted by puncturer 114 is replaced by a soft decision regarding a received bit.

The output of depuncturer 124, possibly combined by a combiner 126 with selected contents of one or more buffers 128, is provided to an error-correcting decoder 130. Decoder 130 attempts to decode its input and corrects any errors which can be corrected. If there are too many errors, they cannot be corrected. An error checker 132 checks whether decoder 130 was successful in decoding the received block. If so, the successfully decoded bits are provided to upper layers, represented as a content sink 134. The combination of the output of depuncturer 124 with the selected contents of one or more of buffers 128 may occur before each decoding, or may only occur after a first decoding attempt without combining is unsuccessful. One reason to make a first decoding attempt without combining is that the selected contents of one or more of buffers 128 may be of such poor decodability that combining the selected contents with the output of depuncturer 124 may impair the decoding of the output of depuncturer 124. Methods of combining used by combiner 126 may include, for example, numerical summation of soft decisions for corresponding bits or averaging of a corresponding stored soft decision value with a new soft decision value.

System 100 implements a feedback scheme so that sending station 102 is informed whether transmissions of encoded data to receiving station 104 are successfully decoded. For example, an ACK/NACK (acknowledgment/negative acknowledgment) scheme may be used, where a positive acknowledgment, ACK, is generated at station 104 and transmitted to station 102 in the event that the output of decoder 130 is accepted by error checker 132, and where a negative acknowledgement, NACK, is generated at station 104 and transmitted to station 102 in the event that the output of decoder 130 is rejected by error checker 132. Therefore, station 104 has a transmitter 136 which enables the ACK/NACK indication to be transmitted to station 102 via antenna 122. The ACK/NACK indication is received in station 102 via antenna 118 by a receiver 138. In another example, positive acknowledgment may be assumed unless a negative acknowledgment is received by station 102 within a certain period of time following transmission of the encoded data. In that example, only NACKs are generated at station 104 and transmitted to station 102 when appropriate. In yet another example, negative acknowledgment may be assumed if a positive acknowledgment has not been received by station 102 within a certain period of time following transmission of the encoded data. In that example, only ACKs are generated at station 104 and transmitted to station 102 when appropriate.

Receipt of a NACK indication may result in a retransmission by station 102 of the content block that was not successfully received by station 104. Rather than retransmitting the same content block with a different puncturing scheme, one or more different content blocks may be transmitted, where the digital content of the content block that was not successfully received is comprised in the one or more different content blocks. In other words, the detected NACK indication is provided to a baseband component 140, which may change how content block segmenter 110 segments the digital content.

It should be noted that resegmentation is just one possible response to receipt of a NACK indication. In the event that the sending entity chooses to resegment, the technology described herein allows incremental redundancy combining to be used to improve decodability. For example, consider the case where, due to excessive errors, first encoded received bits derived from a first transmission cannot be decoded by an error-correcting decoder. If the sending entity chooses to resegment, second encoded received bits may be derived from a second transmission, where the first transmission is based on a first content block segmented from digital content according to a first block segmentation scheme and the second transmission is based on a second content block segmented from the same digital content according to a second block segmentation scheme that differs from the first scheme, and where the first content block and the second content block have a substring in common. It may happen that, due to excessive errors, the second encoded received bits also cannot be decoded by an error-correcting decoder. However, if the technology described herein is implemented, combining into combined bits selected ones of the first encoded received bits and corresponding selected ones of the second encoded received bits, where the correspondence is based on the encoded bits being related to the same portion of the substring, may counteract the effect of some of the errors. Therefore, providing the others of the first encoded received bits along with the combined bits to the error-correcting decoder may enable successful decoding, which means that the bits of the first content block can be accurately determined. Likewise, providing the others of the second encoded received bits along with the combined bits to the error-correcting decoder may enable successful decoding, which means that the bits of the second content block can be accurately determined.

Various tests could be designed to check whether the technology described herein has been implemented and is operating properly. A stream of encoded bits could be designed to have so many errors that it cannot be successfully decoded by an error-correcting decoder. In one test, for example, two such streams are designed, each stream representing a different content block segmented from the same digital content according to a different segmentation scheme, where the two content blocks have a substring in common. Each of the streams designed for the test represents a content block in the sense that it represents the received encoded bits that would be the output of a process involving appending prefix bits and suffix bits to that content block, encoding the block having the appended bits, possibly puncturing the encoded block, transmission of the resultant channel bits over one or more RF channels, reception of RF signals, downconversion of the received RF signals to baseband levels, determination of encoded bits and possibly depuncturing. Although neither of the streams can, independently of the other, be successfully decoded by the error-correcting decoder, the streams are designed so that once combined, as described herein, the combined encoded bits together with the uncombined encoded bits of one of the streams can be successfully decoded by the error-correcting decoder, thus enabling the accurate determination of the bits of the content block that was represented by that stream.

Any appropriate resegmentation scheme may be used. For example, the digital content of the content block that was not successfully received may be divided into two or more smaller content blocks, each of which is a proper substring of the original content block and none of which overlap. In another example, the digital content of the content block that was not successfully received may be concatenated with other digital content and included in a single content block. In yet another example, the digital content of the content block that was not successfully received may be included in two or more other content blocks, not all of which or none of which are proper substrings of the original content block.

When resegmentation is employed, the prefix bits and the suffix bits appended to the new content block(s) are not identical to the prefix bits and the suffix bits appended to the original content block, as explained hereinabove with respect to FIGS. 2A and 2B. Consequently, even if the new content block is a proper substring of the original content block, and both blocks, after having prefix bits and suffix bits appended thereto, are encoded using a convolutional code at the same rate *1*/*R* and the same constraint length K, the bits in columns of the resulting matrices of encoded bits that are affected by the prefix bits and/or by the suffix bits will be different, as explained hereinabove with respect to FIG. 3.

In general, employing resegmentation means that the original content block and the new content block are not identical and have a "substring" of digital content in common. The new content block may be a proper substring of the original content block, or the original content block may be a proper substring of the new content block. It may be that the new content block is not a proper substring of the original content block and that the original content block is not a proper substring of the new content block. It may be that one of the content blocks (original or new) is a proper substring of the other content block, but that the complement of the substring in the other content block is not contiguous in the other content block.

It is generally accepted that the matrices of encoded received bits resulting from different segmentations of the same digital content are so different from one another that they must be decoded in isolation from one another. That is the reason that the EGPRS specifications provide for a "resegment" bit in ARQ control to prevent resegmentation when the network employs incremental redundancy. However, the inventor has discovered that if the length of the substring in common between the differently segmented content blocks is at least as long as the constraint length K, then - barring any distortion due to the transmission over the radio channel and ignoring the effects of different puncturing schemes - the bits of at least one column in the matrix of encoded received bits for the original transmission ought to be identical to the bits of at least one column in the matrix of encoded received bits for the retransmission.

Combiner 126 may store the output of depuncturer 124 in buffer 128, either always or only if the output of decoder 130 is rejected by error checker 132. If the output of decoder 130 is accepted by error checker 132, error checker 132 may instruct buffer 128 to delete a stored block when all the content data in that block has been successfully decoded, in order to make room for storing other blocks. When receiving another transmission based on a content block at least a substring of which is identical to a substring of the content block on which the previously received block was based, combiner 126 will combine the received block after depuncturing with those portions of the buffer contents that were unaffected by the prefix bits and the suffix bits and any new content bits adjacent to the common content substring, thereby providing additional information to decoder 130. If error checker 132 still rejects the output of decoder 130, despite the additional information, then the combined block on which the decoding was done, or portions thereof, may be saved in buffer 128 for further combining with subsequent retransmissions. Saving the combined block in buffer 128 may overwrite previously stored copies of received blocks (or portions thereof) having substrings in common with the combined block. Alternatively, whole received blocks after depuncturing may be stored in buffer 128 in their entirety and combiner 126 may perform multi-way combinations of different overlapping substrings when a new block is received. This latter implementation may require significant memory and processing resources.

Columns of different received matrices are considered to correspond to one another if they represent the encoding of the same bits of digital content.

FIG. 4A illustrates exemplary received matrices resulting from the encoding, puncturing, transmission, reception and downconverting of content blocks 1, 1A and 1B of FIG. 2A. Content blocks 1, 1A and 1B are shown in FIG. 4A with an indication of their content bits. Once the prefix bits and suffix bits are appended to content blocks 1, 1A, and 1B, the process of encoding, puncturing, transmission, reception and downconverting is indicated by arrows 402, 404 and 406, respectively.

A received matrix 412 corresponds to content block 1, a received matrix 414 corresponds to content block 1A, and a received matrix 416 corresponds to content block 1B. The "b" position markers on the matrices indicate the first column that the corresponding content bit "b" starts affecting the output. Note that this column would also be affected by the preceding K-1 bits of the segmented block, whether these bits are other content bits or prefix bits. Hatched columns 418 are the columns of matrix 412 that are unaffected by prefix bits P1 and/or suffix bits S1, for example, columns 20 through 240. Hatched columns 420 are the columns of matrix 414 that are unaffected by prefix bits P1A and/or suffix bits S1A, for example, columns 18 through 116. Hatched columns 422 are the columns of matrix 416 that are unaffected by prefix bits P1B and/or suffix bits S1B, for example, columns 22 through 112. Therefore lightly shaded columns 424 of matrix 412 and lightly shaded columns 426 of matrix 414 correspond to the same bits of digital content. Likewise, darkly shaded columns 428 of matrix 412 and darkly shaded columns 430 of matrix 416 correspond to the same bits of digital content. In this example, columns 420 and 426 are identical and columns 422 and 430 are identical.

Therefore, if decoder 130 is unable to successfully decode matrix 412, then when station 104 has received matrix 414, combiner 126 updates received matrix 414 so that each bit in columns 426 is replaced by a combination of the bit and the corresponding bit in columns 424. Then decoder 130 decodes updated matrix 414 and performs error correction, if possible. Likewise, when station 104 has received matrix 416, combiner 126 updates received matrix 416 so that each bit in columns 430 is replaced by a combination of the bit and the corresponding bit in columns 428. Then decoder 130 decodes updated matrix 416 and performs error correction, if possible. Alternatively, station 104 may attempt to decode matrix 414 and matrix 416 independently and may only combine one or both of those matrices with matrix 412 if the independent decoding is unsuccessful.

In the reverse case, where the initial transmissions resulted in the receipt of matrix 414, which was not successfully decoded, and the receipt of matrix 416, which was not successfully decoded, and the resegmentation and retransmission resulted in the receipt of matrix 412, then combiner 126 updates received matrix 412 so that each bit in columns 424 is replaced by a combination of the bit and the corresponding bit in columns 426, and so that each bit in columns 428 is replaced by a combination of the bit and the corresponding bit in columns 430. Then decoder 130 decodes updated matrix 412 and performs error correction, if possible. It should be noted that station 104 may combine matrix 414 and matrix 412 and perform decoding on the combined matrix even without the receipt of matrix 416. It should also be noted that station 104 may combine matrix 416 and matrix 412 and perform decoding on the combined matrix even without the receipt of matrix 414.

FIG. 4B illustrates exemplary received matrices resulting from the encoding, puncturing, transmission, reception and downconverting of content blocks 3, 22 and 33 of FIG. 2B. Content blocks 3, 22 and 33 are shown in FIG. 4B with an indication of their content bits. In this example, bit indices h, i, j, l and m satisfy the following condition: h < i < j < 1 < m. Once the prefix bits and suffix bits are appended to content blocks 3, 22 and 33, the process of encoding, puncturing, transmission, reception and downconverting is indicated by arrows 442, 444 and 446, respectively.

A received matrix 452 corresponds to content block 3, a received matrix 454 corresponds to content block 22, and a received matrix 456 corresponds to content block 33. Hatched columns 458 are the columns of matrix 452 that are unaffected by prefix bits P3 and/or suffix bits S3. Hatched columns 460 are the columns of matrix 454 that are unaffected by prefix bits P22 and/or suffix bits P22. Hatched columns 462 are the columns of matrix 456 that are unaffected by prefix bits P33 and/or suffix bits S33. However, only the latter part of content block 22 has digital content in common with content block 3, and only the initial part of content block 33 has digital content in common with content block 3. Therefore, only lightly shaded columns 464 of matrix 452 and lightly shaded columns 466 of matrix 454 correspond to the same bits of digital content. Likewise, only darkly shaded columns 468 of matrix 452 and darkly shaded columns 470 of matrix 456 correspond to the same bits of digital content.

FIG. 5 is a flowchart of an exemplary method that may be implemented in combiner 126, decoder 130 and error checker 132. At 501, combiner 126 identifies which buffered matrix (or matrices) has columns that correspond to columns in a currently received matrix of received bits. The correspondence of columns arises from the columns being related to the same bits of digital content. At 502, combiner 126 selects columns of the buffered matrix (or matrices) and of the currently received matrix of received bits, where each pair of corresponding selected columns is unaffected by prefix bits and/or by suffix bits and/or by other adjacent content bits present in one segmentation but not the other. At 504, combiner 126 updates the currently received matrix by combining bits of its selected columns with the bits of corresponding selected columns of the buffered matrix. At 506, the updated matrix is decoded using error-correction by decoder 130. At 508, error checker 132 checks whether decoder 130 has successfully decoded the updated matrix.

FIG. 6 is a flowchart of another exemplary method that may be implemented in combiner 126, decoder 130 and error checker 132. At 601, combiner 126 identifies which buffered matrix has columns that correspond to columns in a currently received matrix of received bits. The correspondence of columns arises from the columns being related to the same bits of digital content. At 602, combiner 126 selects columns of the buffered matrix and of the currently received matrix of received bits, where each pair of corresponding selected columns is unaffected by prefix bits and/or by suffix bits and/or by other adjacent content bits present in one segmentation but not the other. At 604, combiner 126 updates the buffered matrix by combining bits of its selected columns with the bits of corresponding selected columns of the currently received matrix. At 606, the updated matrix is decoded using error-correction by decoder 130. At 608, error checker 132 checks whether decoder 130 has successfully decoded the update matrix.

FIG. 7 is a flowchart of yet another exemplary method that may be implemented in combiner 126, decoder 130 and error checker 132. This method involves updating the currently received matrix, decoding the updated received matrix and error checking as described above with respect to the method of FIG. 5, and updating the buffered matrix and decoding the updated buffered matrix, and error checking as described above with respect to the method of FIG. 6. At 710, station 104 may then compare the decoding outputs. At 712, station 104 may select the decoding output that, according to the comparison, has the best results. An example of a metric for determining the best results is which result enables more bits of the received data to be successfully decoded. Specifically, the metric may be which result advances the sliding window the most.

An example of how to identify columns that can be combined is as follows. Given two input blocks, A and B, to the encoder 112, where A is a string of M bits a₀, a₁, ..., a_{M-1}, and B is a string of N bits b₀, b₁, ..., b_{N-1}, and each block is analogous to block 300 in Fig. 3, and there exists a common substring of *L* bits, *L* at least as large as constraint length K, starting at index *i* in block A and index *j* in block B, then the bits in column *i + K-*1 + *h* of the encoded matrix for A and the bits in column *j* + *K*-1 + *h* of the encoded matrix for B can be combined, for *h* running from 0 to *L-K.* Each of the encoded matrices is analogous to matrix 302 in Fig. 3.

The example of encoder 112 using a convolutional code without recursiveness has been described. However, the technical description provided above is also applicable, with certain modifications, to systems in which encoder 112 uses a turbo code. Turbo codes use recursive convolutional codes but also send systematic bits which are semistatic during retransmissions. Referring again to FIG. 3, it was stated above that in general, the value of the *m*^{th} bit in block 300 affects the values of the output bits in columns m through *m+K-1* of matrix 302, where m is an index that runs from 0 to *N-1.* Specifically in the case of turbo codes, the *m*^{th} bit in block 300 affects different rows of matrix 302 in different ways. On the recursive rows, the *m*^{th} bit affects output bits in all of the column positions. On the systematic rows, the *m*^{th} bit affects only the bit at column m. Therefore, the exemplary matrices shown in FIG. 4A and 4B and the accompanying description are applicable to turbo codes if it is assumed that the matrices contain only systematic rows (the recursive rows having been stripped out) and that the constraint length K is 1. Combining bits of received blocks after depuncturing prior to decoding therefore ought to be applied only to systematic bits (i.e. bits of the systematic rows, but not necessarily all of the bits of the systematic rows). The recursive bits (i.e. bits of the recursive rows, but not necessarily all of the bits of the recursive rows) used along with the updated systematic bits in the decoding may be obtained either from the initial transmission or from the retransmission. It is also possible to decode twice - once with the recursive bits from the initial transmission and once with recursive bits from the retransmission, to compare the decoding outputs, and to select the decoding output that has the best results. An example of a metric for determining the best results is which result enables more bits of the received data to be successfully decoded. Specifically, the metric may be which result advances the sliding window the most. When an initial transmission is not successfully decoded and resegmentation occurs at the sending entity, the sending entity may transmit only the new recursive bits and only the systematic bits which could not already be in the receiver's buffer from a previous segmentation.

The example of how to identify columns that can be combined, provided above, applies in the case of turbo codes if one considers for combining only the bits on the systematic rows of the encoded matrices and one takes K to be 1 for those rows.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer implemented method comprising:
receiving a first transmission and deriving first received bits (452) from the first transmission;
receiving a second transmission and deriving second received bits (454) from the second transmission;
combining into combined bits some (464) of the first received bits (452) and some (466) of the second received bits (454); and
providing those of the second received bits that were not combined, together with the combined bits, to a decoder (130),
the second transmission having been sent following failure of the decoder (130) to successfully decode the first transmission and negative acknowledgement of the first transmission or the first transmission having been sent following failure of the decoder (130) to successfully decode the second transmission and negative acknowledgment of the second transmission,
wherein the first received bits (452) would be identical to transmitted first encoded bits resulting from encoding of a first content block (1, 3) which was segmented from digital content according to a first block segmentation scheme, if any one or any combination of the following not having occurred:
i) prefix bits or suffix bits or both being appended to the first content block prior to the encoding of the first content block;
ii) puncturing of the first encoded bits prior to transmission of the first transmission; and
iii) any errors being introduced during transmission of the first transmission,
wherein the second received bits (454) would be identical to transmitted second encoded bits resulting from encoding of a second content block (1A, 22) which was segmented from the digital content according to a second block segmentation scheme that differs from the first block segmentation scheme, if any any one or any combination of the following not having occurred:
i) prefix bits or suffix bits or both being appended to the second content block prior to the encoding of the second content block;
ii) puncturing of the second encoded bits prior to transmission of the second transmission; and
iii) any errors introduced during transmission of the second transmission,
the first content block (1,3) and the second content block (1A, 22) are not identical,
the first content block (1, 3) and the second content block (1A, 22) have a substring (464, 466) in common, and
the first received bits that are combined into the combined bits relate to the same bits of the substring as the second received bits that are combined into the combined bits.

2. The method of claim 1, wherein the second content block (1A) is wholly contained in the first content block (1), a third content block (1B), which was segmented from the digital content according to the second block segmentation scheme, is wholly contained in the first content block (1), and the first content block (1) is identical to a concatenation of the second content block (1A) and the third content block (1B).

3. The method of claim 1 or claim 2, wherein first prefix bits (P1, P3) are appended to the beginning of the first content block (1, 3) and first suffix bits (S1, S3) are appended to the end of the first content block (1, 3) prior to encoding of the appended first content block, and wherein second prefix bits (P1A, P22) are appended to the beginning of the second content block (1A, 22) and second suffix bits (S1A, S22) are appended to the end of the second content block (1A, 22) prior to encoding of the appended second content block, the method further comprising:
selecting as the bits to be combined those received bits that are unaffected by prefix bits, unaffected by suffix bits and unaffected by any content bits that are not common to the first content block (1, 3) and the second content block (1A, 22).

4. The method of any one of claims 1 to 3, further comprising:
providing those of the first received bits that were not combined, together with the combined bits, to the decoder (130); and
determining whether to use output of the decoder (130) resulting from providing those of the first received bits that were not combined, together with the combined bits, to the decoder (130) or output of the decoder (130) resulting from providing those of the second received bits that were not combined, together with the combined bits, to the decoder (130).

5. The method of any one of claims 1, 3 or 4, wherein the first content block (1A, 1B) is wholly contained in the second content block (1).

6. The method of any one of claims 1 to 4, wherein the second content block (1A, 1B) is wholly contained in the first content block (1).

7. The method of any one of claims 1, 3 or 4, wherein the first content block (3) is not wholly contained in the second content block (22, 33) and the second content block (22, 33) is not wholly contained in the first content block (3).

8. The method of any one of claims 1 to 7, wherein the received bits are soft decision bits.

9. The method of any one of claims 1 to 7, wherein the received bits are hard decision bits.

10. The method of any one of claims 1 to 9, wherein the encoding is according to a convolutional code without recursiveness.

11. The method of any one of claims 1 to 9, wherein the encoding is according to a turbo code and the received bits combined into the combined bits are systematic bits.

12. The method of any one of claims 1 to 11, wherein the first transmission is received before the second transmission is received.

13. The method of any one of claims 1 to 11, wherein the second transmission is received before the first transmission is received.

14. A communication station (104) able to communicate over radio communication channels, the communication station (104) comprising:
a receiver (120) to detect radio frequency signals and to downconvert the received signal to baseband levels;
means for determining first received bits from the downconverted received signals, wherein the first received bits would be identical to transmitted first encoded bits resulting from encoding of a first content block (1, 3) which was segmented from digital content according to a first block segmentation scheme, if any one or any combination of the following not having occurred:
i) prefix bits or suffix bits or both being appended to the first content block prior to encoding of the first content block;
ii) puncturing of the first encoded bits prior to transmission of the received signal; and
iii) any errors introduced during transmission of the received signal;
one or more buffers (128) arranged to store received bits derived from one or more previously received signals or combinations of received bits derived from previously received signals or both;
an error-correcting decoder (130);
an error checker (132) to evaluate the output of the error-correcting decoder (130); and
a combiner (126) to identify contents (464) of the one or more buffers (128) that relate to the same bits of a substring in the digital content as some (466) of the first received bits, to combine into combined bits selected ones of the identified contents with selected ones of the first received bits that relate to the same bits of the substring, and to provide the combined bits and other first or second received bits that were not combined to the error-correcting decoder (130),
wherein the received bits determined from one of the previously received signals would be identical to transmitted second encoded bits resulting from encoding of a second content block (1A, 22) which was segmented from the digital content according to a second block segmentation scheme that differs from the first block segmentation scheme, if any one or any combination of the following not having occurred:
i) prefix bits or suffix bits or both being appended to the second content block prior to the encoding of the second content block;
ii) puncturing of the second encoded bits prior to transmission of the one of the previously received signals; and
iii) any errors introduced during transmission of the one of the previously received signals, and
wherein the first content block (1, 3) and the second content block (1A, 22) are not identical.

15. The communication station (104) of claim 14, wherein the combiner (126) is to select as the bits to be combined those bits that are unaffected by prefix bits, unaffected by suffix bits and unaffected by any content bits that are not common to the first content block (1, 3) and the second content block (1A, 22).

16. The communication station (104) of claim 14 or claim 15, wherein the other bits provided to the error-correcting decoder (130) are those of the first received bits that have not been combined with the selected ones of the identified contents.

17. The communication station (104) of claim 14 or claim 15, wherein the other bits provided to the error-correcting decoder (130) are bits stored in the one or more buffers (128) that have not been combined with any of the first received bits.

18. A computer-readable medium comprising instructions executable on a processor of a computing system wherein the instructions, when executed by the processor, cause the computing system to perform the steps of the method as claimed in any one of claims 1 to 13.

## Patentansprüche

1. Ein computerimplementiertes Verfahren, das aufweist:
Empfangen einer ersten Übertragung und Ableiten von ersten empfangenen Bits (452) aus der ersten Übertragung;
Empfangen einer zweiten Übertragung und Ableiten von zweiten empfangenen Bits (454) aus der zweiten Übertragung;
Kombinieren in kombinierte Bits von einigen (464) der ersten empfangenen Bits (452) und einigen (466) der zweiten empfangenen Bits (454); und
Liefern derjenigen der zweiten empfangenen Bits, die nicht kombiniert wurden, zusammen mit den kombinierten Bits an einen Decodierer (130),
wobei die zweite Übertragung nachfolgend auf ein Fehlschlagen des Decodierers (130), die erste Übertragung erfolgreich zu decodieren, und einer negativen Bestätigung der ersten Übertragung gesendet wurde oder die erste Übertragung nachfolgend auf ein Fehlschlagen des Decodierers (130),
die zweite Übertragung erfolgreich zu decodieren, und einer negativen Bestätigung der zweiten Übertragung gesendet wurde,
wobei die ersten empfangenen Bits (452) identisch wären zu übertragenen ersten codierten Bits, die aus einem Codieren eines ersten Inhaltsblocks (1, 3) resultieren, der aus digitalem Inhalt gemäß einem ersten Block-Segmentations-Schema segmentiert wurde, wenn eines oder eine Kombination des Folgenden nicht stattgefunden hat:
i) Präfix-Bits oder Suffix-Bits oder beide werden an den ersten Inhaltsblock vor dem Codieren des ersten Inhaltsblock angehängt;
ii) Punkturieren der ersten codierten Bits vor einer Übertragung der ersten Übertragung; und
iii) Fehler eingeführt werden während einer Übertragung der ersten Übertragung,
wobei die zweiten empfangenen Bits (454) identisch wären zu übertragenen zweiten codierten Bits, die aus einem Codieren eines zweiten Inhaltsblocks (1A, 22) resultieren, der aus dem digitalen Inhalt segmentiert wurde gemäß einem zweiten Block-Segmentations-Schema, das sich von dem ersten Block-Segmentations-Schema unterscheidet, wenn eines oder eine Kombination des Folgenden nicht stattgefunden hat:
i) Präfix-Bits oder Suffix-Bits oder beide werden an den zweiten Inhaltsblock vor dem Codieren des zweiten Inhaltsblock angehängt;
ii) Punkturieren der zweiten codierten Bits vor einer Übertragung der zweiten Übertragung; und
iii) Fehler eingeführt werden während einer Übertragung der zweiten Übertragung,
der erste Inhaltsblock (1, 3) und der zweite Inhaltsblock (1A, 22) sind nicht identisch,
erste Inhaltsblock (1, 3) und der zweite Inhaltsblock (1A, 22) haben einen Teil-String (464, 466) gemeinsam, und
die ersten empfangenen Bits, die in die kombinierten Bits kombiniert sind, betreffen dieselben Bits des Teil-Strings wie die zweiten empfangenen Bits, die in die kombinierten Bits kombiniert sind.

2. Das Verfahren gemäß Anspruch 1, wobei der zweite Inhaltsblock (1A) vollständig in dem ersten Inhaltsblock (1) enthalten ist, ein dritter Inhaltsblock (1B), der aus dem digitalen Inhalt gemäß dem zweiten Block-Segmentierungs-Schema segmentiert wurde, vollständig in dem ersten Inhaltsblock (1) enthalten ist, und der erste Inhaltsblock (1) zu einer Verknüpfung des zweiten Inhaltsblock (1A) und des dritten Inhaltsblocks (1B) identisch ist.

3. Das Verfahren gemäß Anspruch 1 oder Anspruch 2, wobei erste Präfix-Bits (P1, P3) an den Anfang des ersten Inhaltsblocks (1, 3) angehängt werden und erste Suffix-Bits (S1, S3) an das Ende der ersten Inhaltsblocks (1, 3) angehängt werden vor einem Codieren des angehängten ersten Inhaltsblocks, und wobei zweite Präfix-Bits (P1A, P22) an den Anfang des zweiten Inhaltblocks (1A, 22) angehängt werden und zweite Suffix-Bits (S1A, S22) an das Ende des zweiten Inhaltblocks (1A, 22) angehängt werden vor einem Codieren des angehängten zweiten Inhaltsblock, wobei das Verfahren weiter aufweist:
Auswählen, als die zu kombinierenden Bits, diejenigen empfangenen Bits, die von Präfix-Bits nicht betroffen sind, von Suffix-Bits nicht betroffen sind und von Inhalt-Bits nicht betroffen sind, die für den ersten Inhaltsblock (1, 3) und den zweiten Inhaltsblock (1A, 22) nicht gemeinsam sind.

4. Das Verfahren gemäß einem der Ansprüche 1 bis 3, das weiter aufweist:
Liefern derjenigen der ersten empfangenen Bits, die nicht kombiniert wurden, zusammen mit den kombinierten Bits an den Decodierer (130); und
Bestimmen, ob eine Ausgabe des Decodierers (130) zu verwenden ist, die aus einem Liefern derjenigen der ersten empfangenen Bits, die nicht kombiniert wurden, zusammen mit den kombinierten Bits an den Decodierer (130) resultiert, oder eine Ausgabe des Decodierers (130) zu verwenden ist, die aus einem Liefern derjenigen der zweiten empfangenen Bits, die nicht kombiniert wurden, zusammen mit den kombinierten Bits an den Decodierer (130) resultiert.

5. Das Verfahren gemäß einem der Ansprüche 1, 3 oder 4, wobei der erste Inhaltsblock (1A, 1B) vollständig in dem zweiten Inhaltsblock (1) enthalten ist.

6. Das Verfahren gemäß einem der Ansprüche 1 bis 4, wobei der zweite Inhaltsblock (1A, 1B) vollständig in dem ersten Inhaltsblock (1) enthalten ist.

7. Das Verfahren gemäß einem der Ansprüche 1, 3 oder 4, wobei der erste Inhaltsblock (3) nicht vollständig in dem zweiten Inhaltsblock (22, 33) enthalten ist und der zweite Inhaltsblock (22, 33) nicht vollständig in dem ersten Inhaltsblock (3) enthalten ist.

8. Das Verfahren gemäß einem der Ansprüche 1 bis 7, wobei die empfangenen Bits Soft-Decision-Bits sind.

9. Das Verfahren gemäß einem der Ansprüche 1 bis 7, wobei die empfangenen Bits Hard-Decision-Bits sind.

10. Das Verfahren gemäß einem der Ansprüche 1 bis 9, wobei das Codieren gemäß einem Faltungscode ohne Rekursion ist.

11. Das Verfahren gemäß einem der Ansprüche 1 bis 9, wobei das Codieren gemäß einem Turbo-Code ist und die empfangenen Bits, die in die kombinierten Bits kombiniert sind, systematische Bits sind.

12. Das Verfahren gemäß einem der Ansprüche 1 bis 11, wobei die erste Übertragung empfangen wird, bevor die zweite Übertragung empfangen wird.

13. Das Verfahren gemäß einem der Ansprüche 1 bis 11, wobei die zweite Übertragung empfangen wird, bevor die erste Übertragung empfangen wird.

14. Eine Kommunikationsstation (104), die fähig ist, über Funkkommunikationskanäle zu kommunizieren, wobei die Kommunikationsstation (104) aufweist:
einen Empfänger (120) zum Erfassen von Funkfrequenzsignalen und zum Abwärtswandeln des empfangenen Signals auf Basisband-Pegel;
Mittel zum Bestimmen erster empfangener Bits aus den abwärtsgewandelten empfangenen Signalen, wobei die ersten empfangenen Bits identisch wären zu übertragenen ersten codierten Bits, die aus einem Codieren eines ersten Inhaltsblocks (1, 3) resultieren, der aus digitalem Inhalt gemäß einem ersten Block-Segmentations-Schema segmentiert wurde, wenn eines oder eine Kombination des Folgenden nicht stattgefunden hat:
i) Präfix-Bits oder Suffix-Bits oder beide werden an den ersten Inhaltsblock vor dem Codieren des ersten Inhaltsblock angehängt;
ii) Punkturieren der ersten codierten Bits vor einer Übertragung des empfangenen Signals; und
iii) Fehler eingeführt werden während einer Übertragung des empfangenen Signals;
einen oder mehrere Puffer (128), der/die ausgebildet ist/sind zum Speichern empfangener Bits, die von einem oder mehreren vorher empfangenen Signalen abgeleitet sind, oder Kombinationen von empfangenen Bits, die von vorher empfangenen Signalen abgeleitet sind, oder beides;
einen Fehlerkorrektur-Decodierer (130);
eine Fehlerprüfeinrichtung (132) zum Evaluieren der Ausgabe des FehlerKorrektur-Decodierers (130); und
einen Kombinierer (126) zum Identifizieren von Inhalten (464) des einen oder mehrerer Puffer(s) (128), die dieselben Bits eines Teil-Strings in dem digitalen Inhalt als einige (466) der ersten empfangenen Bits betreffen, zum Kombinieren in kombinierte Bits von ausgewählten der identifizierten Inhalte mit ausgewählten der ersten empfangenen Bits, die dieselben Bits des Teil-Strings betreffen, und zum Liefern der kombinierten Bits und anderer erster und zweiter empfangener Bits, die nicht kombiniert wurden, an den FehlerKorrektur-Decodierer (130),
wobei die empfangenen Bits, die von einem der zuvor empfangenen Signale bestimmt werden, identisch wären zu übertragenen zweiten codierten Bits, die aus einem Codieren eines zweiten Inhaltsblocks (1A, 22) resultieren, der aus dem digitalen Inhalt gemäß einem zweiten Block-Segmentierungs-Schema segmentiert wurde, das sich von dem ersten Block-Segmentierungs-Schema unterscheidet, wenn eines oder eine Kombination des Folgenden nicht stattgefunden hat:
i) Präfix-Bits oder Suffix-Bits oder beide werden an den zweiten Inhaltsblock vor dem Codieren des zweiten Inhaltsblocks angehängt;
ii) Punkturieren der zweiten codierten Bits vor einer Übertragung des einen der zuvor empfangenen Signale; und
iii) Fehler eingeführt werden während einer Übertragung des einen der zuvor empfangenen Signale, und
wobei der erste Inhaltsblock (1, 3) und der zweite Inhaltsblock (1A, 22) nicht identisch sind.

15. Die Kommunikationsstation (104) gemäß Anspruch 14, wobei der Kombinierer (126) als die zu kombinierenden Bits diejenigen Bits auszuwählen hat, die von Präfix-Bits nicht betroffen sind, von Suffix-Bits nicht betroffen sind und von Inhalt-Bits nicht betroffen sind, die für den ersten Inhaltsblock (1, 3) und den zweiten Inhaltsblock (1A, 22) nicht gemeinsam sind.

16. Die Kommunikationsstation (104) gemäß Anspruch 14 oder Anspruch 15, wobei die anderen Bits, die an den Fehlerkorrektur-Decodierer (130) geliefert werden, diejenigen der ersten empfangenen Bits sind, die nicht mit den ausgewählten der identifizierten Inhalte kombiniert wurden.

17. Die Kommunikationsstation (104) gemäß Anspruch 14 oder Anspruch 15, wobei die anderen Bits, die an den Fehlerkorrektur-Decodierer (130) geliefert werden, Bits sind, die in dem einen oder mehreren Puffer(n) (128) gespeichert sind, die nicht mit ersten empfangenen Bits kombiniert wurden.

18. Ein computerlesbares Medium, das Anweisungen aufweist, die auf einem Prozessor eines Computersystems ausführbar sind, wobei die Anweisungen bei Ausführung durch den Prozessor das Computersystem veranlassen, die Schritte des Verfahrens gemäß einem der Ansprüche 1 bis 13 durchzuführen.

## Revendications

1. Procédé mis en oeuvre par ordinateur comprenant :
la réception d'une première transmission et la dérivation de premiers bits reçus (452) de la première transmission ;
la réception d'une seconde transmission et la dérivation de seconds bits reçus (454) de la seconde transmission ;
la combinaison en bits combinés de certains (464) des premiers bits reçus (452) et de certains (466) des seconds bits reçus (454) ; et
la fourniture de ceux des seconds bits reçus qui n'ont pas été combinés, conjointement avec les bits combinés, à un décodeur (130),
la seconde transmission ayant été envoyée suite à l'échec du décodeur (130) à décoder avec succès la première transmission et à l'accusé de réception négatif de la première transmission ou la première transmission ayant été envoyée suite à l'échec du décodeur (130) à décoder avec succès la seconde transmission et à l'accusé de réception négatif de la seconde transmission,
dans lequel les premiers bits reçus (452) seraient identiques aux premiers bits encodés transmis résultant de l'encodage d'un premier bloc de contenu (1, 3) qui a été segmenté à partir d'un contenu numérique selon un premier schéma de segmentation de bloc, si l'un quelconque ou une combinaison quelconque de ce qui suit ne s'est pas produit :
i) des bits de préfixe ou des bits de suffixe ou les deux étant ajoutés au premier bloc de contenu avant l'encodage du premier bloc de contenu ;
ii) la perforation des premiers bits encodés avant la transmission de la première transmission ; et
iii) toutes erreurs introduites pendant la transmission de la première transmission,
dans lequel les seconds bits reçus (454) seraient identiques aux seconds bits encodés transmis résultant de l'encodage d'un deuxième bloc de contenu (1A, 22) qui a été segmenté à partir du contenu numérique selon un second schéma de segmentation de bloc qui diffère du premier schéma de segmentation de bloc, si l'un quelconque ou une combinaison quelconque de ce qui suit ne s'est pas produit :
i) des bits de préfixe ou des bits de suffixe ou les deux étant ajoutés au deuxième bloc de contenu avant l'encodage du deuxième bloc de contenu ;
ii) la perforation des seconds bits encodés avant la transmission de la seconde transmission ; et
iii) toutes erreurs introduites pendant la transmission de la seconde transmission,
le premier bloc de contenu (1, 3) et le deuxième bloc de contenu (1A, 22) ne sont pas identiques,
le premier bloc de contenu (1, 3) et le deuxième bloc de contenu (1A, 22) ont une sous-chaîne (464, 466) en commun, et
les premiers bits reçus qui sont combinés en les bits combinés se rapportent aux mêmes bits de la sous-chaîne que les seconds bits reçus qui sont combinés en les bits combinés.

2. Procédé selon la revendication 1, dans lequel le deuxième bloc de contenu (1A) est entièrement contenu dans le premier bloc de contenu (1), un troisième bloc de contenu (1B), qui a été segmenté à partir du contenu numérique selon le second schéma de segmentation de bloc, est entièrement contenu dans le premier bloc de contenu (1), et le premier bloc de contenu (1) est identique à une concaténation du deuxième bloc de contenu (1A) et du troisième bloc de contenu (1B).

3. Procédé selon la revendication 1 ou la revendication 2, dans lequel des premiers bits de préfixe (P1, P3) sont ajoutés au début du premier bloc de contenu (1, 3) et des premiers bits de suffixe (S1, S3) sont ajoutés à la fin du premier bloc de contenu (1, 3) avant l'encodage du premier bloc de contenu ajouté, et dans lequel des seconds bits de préfixe (P1A, P22) sont ajoutés au début du deuxième bloc de contenu (1A, 22) et des seconds bits de suffixe (S1A, S22) sont ajoutés à la fin du deuxième bloc de contenu (1A, 22) avant l'encodage du deuxième bloc de contenu ajouté, le procédé comprenant en outre :
la sélection en tant que bits à combiner de ces bits reçus qui sont non affectés par des bits de préfixe, non affectés par des bits de suffixe et non affectés par tous bits de contenu qui ne sont pas communs au premier bloc de contenu (1, 3) et au deuxième bloc de contenu (1A, 22).

4. Procédé selon l'une quelconque des revendications 1 à 3, comprenant en outre :
la fourniture de ceux des premiers bits reçus qui n'ont pas été combinés, conjointement avec les bits combinés, au décodeur (130) ; et
la détermination du fait d'utiliser une sortie du décodeur (130) résultant de la fourniture de ceux des premiers bits reçus qui n'ont pas été combinés, conjointement avec les bits combinés, au décodeur (130) ou une sortie du décodeur (130) résultant de la fourniture de ceux des seconds bits reçus qui n'ont pas été combinés, conjointement avec les bits combinés, au décodeur (130).

5. Procédé selon l'une quelconque des revendications 1, 3 ou 4, dans lequel le premier bloc de contenu (1A, 1B) est entièrement contenu dans le deuxième bloc de contenu (1).

6. Procédé selon l'une quelconque des revendications 1 à 4, dans lequel le deuxième bloc de contenu (1A, 1B) est entièrement contenu dans le premier bloc de contenu (1).

7. Procédé selon l'une quelconque des revendications 1, 3 ou 4, dans lequel le premier bloc de contenu (3) n'est pas entièrement contenu dans le deuxième bloc de contenu (22, 33) et le deuxième bloc de contenu (22, 33) n'est pas entièrement contenu dans le premier bloc de contenu (3).

8. Procédé selon l'une quelconque des revendications 1 à 7, dans lequel les bits reçus sont des bits de décision souple.

9. Procédé selon l'une quelconque des revendications 1 à 7, dans lequel les bits reçus sont des bits de décision ferme.

10. Procédé selon l'une quelconque des revendications 1 à 9, dans lequel l'encodage s'effectue selon un code convolutionnel sans récursivité.

11. Procédé selon l'une quelconque des revendications 1 à 9, dans lequel l'encodage s'effectue selon un turbocode et les bits reçus combinés en les bits combinés sont des bits systématiques.

12. Procédé selon l'une quelconque des revendications 1 à 11, dans lequel la première transmission est reçue avant que la seconde transmission ne soit reçue.

13. Procédé selon l'une quelconque des revendications 1 à 11, dans lequel la seconde transmission est reçue avant que la première transmission ne soit reçue.

14. Station de communication (104) conçue pour communiquer sur des canaux de communication radio, la station de communication (104) comprenant :
un récepteur (120) pour détecter des signaux radiofréquence et convertir par abaissement le signal reçu à des niveaux de bande de base ;
des moyens pour déterminer des premiers bits reçus à partir des signaux reçus convertis par abaissement, où les premiers bits reçus seraient identiques aux premiers bits encodés transmis résultant de l'encodage d'un premier bloc de contenu (1, 3) qui a été segmenté à partir d'un contenu numérique selon un premier schéma de segmentation de bloc, si l'un quelconque ou une combinaison quelconque de ce qui suit ne s'est pas produit :
i) des bits de préfixe ou des bits de suffixe ou les deux étant ajoutés au premier bloc de contenu avant l'encodage du premier bloc de contenu ;
ii) la perforation des premiers bits encodés avant la transmission du signal reçu ; et
iii) toutes erreurs introduites pendant la transmission du signal reçu ;
un ou plusieurs tampons (128) agencés pour stocker des bits reçus dérivés d'un ou plusieurs signaux reçus précédemment ou des combinaisons de bits reçus dérivées de signaux reçus précédemment ou les deux ;
un décodeur de correction d'erreur (130) ;
un vérificateur d'erreur (132) pour évaluer la sortie du décodeur de correction d'erreur (130) ; et
un combinateur (126) pour identifier des contenus (464) des un ou plusieurs tampons (128) qui se rapportent aux mêmes bits d'une sous-chaîne dans le contenu numérique en tant que certains (466) des premiers bits reçus, pour combiner en bits combinés les contenus sélectionnés des contenus identifiés avec des bits sélectionnés des premiers bits reçus qui se rapportent aux mêmes bits de la sous-chaîne, et pour fournir les bits combinés et d'autres premiers ou seconds bits reçus qui n'ont pas été combinés au décodeur de correction d'erreur (130),
dans lequel les bits reçus déterminés à partir d'un des signaux reçus précédemment seraient identiques aux seconds bits encodés transmis résultant de l'encodage d'un deuxième bloc de contenu (1A, 22) qui a été segmenté à partir du contenu numérique selon un second schéma de segmentation de bloc qui diffère du premier schéma de segmentation de bloc, si l'un quelconque ou une combinaison quelconque de ce qui suit ne s'est pas produit :
i) des bits de préfixe ou des bits de suffixe ou les deux étant ajoutés au deuxième bloc de contenu avant l'encodage du deuxième bloc de contenu ;
ii) la perforation des seconds bits encodés avant la transmission dudit un des signaux reçus précédemment ; et
iii) toutes erreurs introduites pendant la transmission dudit un des signaux reçus précédemment, et
le premier bloc de contenu (1, 3) et le deuxième bloc de contenu (1A, 22) n'étant pas identiques.

15. Station de communication (104) selon la revendication 14, dans laquelle le combinateur (126) doit sélectionner en tant que bits à combiner ces bits qui sont non affectés par des bits de préfixe, non affectés par des bits de suffixe et non affectés par tous bits de contenu qui ne sont pas communs au premier bloc de contenu (1, 3) et au deuxième bloc de contenu (1A, 22).

16. Station de communication (104) selon la revendication 14 ou la revendication 15, dans laquelle les autres bits fournis au décodeur de correction d'erreur (130) sont ceux des premiers bits reçus qui n'ont pas été combinés avec les contenus sélectionnés des contenus identifiés.

17. Station de communication (104) selon la revendication 14 ou la revendication 15, dans laquelle les autres bits fournis au décodeur de correction d'erreur (130) sont des bits stockés dans les un ou plusieurs tampons (128), qui n'ont été combinés avec aucun des premiers bits reçus.

18. Support lisible par ordinateur comprenant des instructions exécutables sur un processeur d'un système informatique dans lequel les instructions, lorsqu'elles sont exécutées par le processeur, amènent le système informatique à effectuer les étapes du procédé tel que revendiqué dans l'une quelconque des revendications 1 à 13.
